(19) Europäisches Patentamt
European Patent Office
Office européen des brevets

(11) Publication number : **0 604 104 A2**

(12) # EUROPEAN PATENT APPLICATION

(21) Application number : **93310069.5**

(22) Date of filing : **14.12.93**

(51) Int. Cl.$^5$ : **C08L 83/07,** C08K 5/09, C08K 5/05, C08K 5/56

(30) Priority : **14.12.92 JP 353620/92**

(43) Date of publication of application : **29.06.94 Bulletin 94/26**

(84) Designated Contracting States : **DE FR GB**

(71) Applicant : **SHIN-ETSU CHEMICAL CO., LTD.**
**6-1, Ohtemachi 2-chome**
**Chiyoda-ku Tokyo (JP)**

(72) Inventor : **Yoshikawa, Yuji**
**1610 Nishikamiisobe**
**Annaka-shi, Gunma-Ken (JP)**
Inventor : **Yamamoto, Kenji**
**12-37 Isobe 3-chome**
**Annaka-shi, Gunma-ken (JP)**
Inventor : **Tanaka, Kouichi**
**2-32, Isobe 4-chome**
**Annaka-shi, Gunma-ken (JP)**
Inventor : **Takarada, Mitsuhiro**
**279-6 Kenzaki-machi**
**Takasaki-shi, Gunma-ken (JP)**

(74) Representative : **Stoner, Gerard Patrick et al**
**MEWBURN ELLIS**
**York House**
**23 Kingsway**
**London WC2B 6HP (GB)**

(54) **Hydrosilylative compositions and hydrosilylation reaction processes.**

(57) A blend of (A) a silicone compound having at least two alkenyl or alkynyl groups in a molecule, (B) an organic silicon compound having at least two hydrogen atoms each directly attached to a silicon atom in a molecule, and (C) a hydrosilylation catalyst is blended with (D) an organic iron or aluminum compound to form a hydrosilylative composition. Component (D) scavenges a catalyst poison, permitting components (A) and (B) to undergo hydrosilylation reaction with the aid of catalyst (C).

EP 0 604 104 A2

Jouve, 18, rue Saint-Denis, 75001 PARIS

This invention relates to a hydrosilylative composition comprising a silicone compound having an aliphatic unsaturated bond, a compound having a silylidyne radical and a hydrosilylation catalyst such as platinum and a hydrosilylation reaction process of subjecting the former two compounds to hydrosilylation reaction in the presence of the catalyst. More particularly, it relates to a hydrosilylative composition and process which permit hydrosilylation reaction to readily proceed even in a system which contains or contacts with catalyst poisons.

It is well known that silicone compounds having an aliphatic unsaturated bond and compounds having a silylidyne ( - SiH) radical undergo hydrosilylation reaction in the presence of hydrosilylation catalysts such as platinum or rhodium series catalysts whereby curing takes place through addition of the silylidyne radical to the unsaturated bond. There were proposed in the art a variety of curable resin compositions which cure through such hydrosilylation reaction.

Since the hydrosilylation reaction is high in reactivity, curing of resin compositions through hydrosilylation reaction has the advantage that the compositions cure uniformly both at the surface and the interior and with a minimal volume loss. Another advantage is that an overall process from mixing of components to form a composition to the end of curing is energy saving.

Owing to these advantages, coupled with availability in liquid form and ease of handing without a need for special equipment or techniques, the curable resin compositions now find widespread use in a variety of fields. For example, these compositions are used for electrical insulation, mold patterning, junction coating, optical fibers, LIMS molding, silicone gel, release paper, and tackifiers.

However, the hydrosilylation reaction is sensitive to catalyst poisons. More particularly, if such elements as N, P, S, Sn and As, even in trace amounts, are present in the compositions, or if such elements are present in substrates to which the compositions are coated and cured, then these elements become catalyst poisons to considerably inhibit hydrosilylation reaction. Retarded hydrosilylation reaction can result in short curing.

It is then a common practice to carry out hydrosilylation reaction while utilizing suitable catalyst poison scavenging means. That is, catalyst poisons can be removed from the composition itself or the substrate to which the composition is coated and cured, for example, by pretreating the components of the composition with activated carbon or by heat cleaning the substrate to pyrolytically decomposing off the catalyst poisons. It is also possible to carry out hydrosilylation reaction by raising the reaction temperature to enhance the activity of the hydrosilylation catalyst or by increasing the amount of the hydrosilylation catalyst added.

These approaches, however, are disadvantageous both in process and economy. It is thus desired to ensure that hydrosilylation reaction proceeds even in the presence of trace amounts of catalyst poisons.

A general aim herein is to provide novel hydrosilylation compositions and methods of using and preparing them, preferably compositions and processes which permit hydrosilylation reaction to proceed without inhibition even in the presence of trace amounts of catalyst poisons including such elements as N, P, S, Sn and As.

Regarding the hydrosilylation reaction between a silicone compound having at least two alkenyl or alkynyl groups in a molecule and an organic silicon compound having at least two hydrogen atoms each directly attached to a silicon atom in a molecule in the presence of a hydrosilylation catalyst, the inventors have found that the poisoning of a catalyst poison component containing N, P, S, Sn or As is inhibited if organic iron compounds such as iron octylate, iron naphthenate and iron acetylacetate or organic aluminum compounds, for example, aluminum alkoxides such as aluminum butoxide, aluminum isobutoxide, and aluminum isopropoxide and aluminum chelates such as acetylacetonatoaluminum and ethylacetoacetonatoaluminum are present in the reaction system. Then even when such a catalyst poison component is contained in a composition or a substrate with which the composition comes in contact, hydrosilylation reaction can take place relatively freely. Thus, broadly the invention provides the use of such iron and/or aluminium compounds to inhibit catalyst poisoning in this context.

One specific aspect provides a hydrosilylative composition comprising

(A) a silicone compound having at least two alkenyl or alkynyl groups in a molecule,

(B) an organic silicon compound having at least two hydrogen atoms each directly attached to a silicon atom in a molecule,

(C) a hydrosilylation catalyst, and

(D) at least one of an organic iron compound and an organic aluminum compound.

In a second aspect, the present invention provides a hydrosilylation reaction process comprising the step of:

subjecting (A) a silicone compound having at least two alkenyl or alkynyl groups in a molecule and (B) an organic silicon compound having at least two hydrogen atoms each directly attached to a silicon atom in a molecule to hydrosilylation reaction in the presence of (C) a hydrosilylation catalyst, while using (D) at least one of an organic iron compound and an organic aluminum compound in the reaction system.

It is not well understood why the addition of an organic iron or aluminum compound permits hydrosilylation

reaction to take place even in the presence of a catalyst poison component containing N, P, S, Sn or As. Though not bound by theory, we hypothesise as follows. If a catalyst poison is present, a Group VIII transition metal catalyst as the hydrosilylation catalyst coordinates with the catalyst poison so that hydrosilylation reaction proceeds no longer. Nevertheless, if hydrosilylation reaction is effected in a system where a Group VIII transition metal catalyst coexists with an organic iron or aluminum compound, the organic iron or aluminum compound preferentially coordinates with the catalyst poison so that the Group VIII transition metal catalyst may remain active. Then even in the presence of a catalyst poison, hydrosilylation reaction can proceed in the same manner as does a catalyst poison - free system.

The invention also embraces precursor blend compositions such as (A), (B) and (D); (A), (C) and (D), and (B), (C) and (D).

The hydrosilylative composition according to the first aspect of the present invention can be prepared as a curable resin composition and includes (A) a silicone compound having at least two alkenyl or alkynyl groups in a molecule, (B) an organic silicon compound having at least two hydrogen atoms each directly attached to a silicon atom in a molecule, and (C) a hydrosilylation catalyst.

Component (A) is a silicone compound or organopolysiloxane which is not particularly limited insofar as it has at least two alkenyl or alkynyl groups in a molecule. Exemplary alkenyl group include aliphatic unsaturated hydrocarbon groups such as vinyl, allyl, methylvinyl, propenyl, butenyl, pentenyl and hexenyl groups, and cyclic unsaturated hydrocarbon groups such as cyclopropenyl, cyclobutenyl, cyclopentenyl and cyclohexenyl groups. Exemplary alkynyl groups include ethynyl, propargyl and α , α - dimethylpropargyl groups.

More detailedly, the silicone compound or organopolysiloxane may typically have the following formula:

$$R^1_aR^2_bSiO_{(4-a-b)/2}$$

wherein $R^1$ represents an alkenyl or alkynyl group, $R^2$ represents a monovalent hydrocarbon group having 1 to 10 carbon atoms (but not alkenyl or alkynyl group) and the letters a and b represent positive numbers satisfying the ranges of $0 < a < 4$, $0 < b < 4$ and $0 < a + b < 4$ so that the organopolysiloxane has at least two alkenyl or alkynyl groups.

The monovalent hydrocarbon groups of $R^2$ includes an alkyl groups such as methyl, ethyl, propyl, butyl and the like, an aryl group such as phenyl and the like, an aralkyl group such as benzyl and the like, an cycloalkyl group such as cyclohexyl and the like. They may have substitution, provided that the substitution does not spoil the curability of the composition or any other conventionally-desired property. For example, alkyl may be halo-substituted alkyl such as trifluoropropylalkyl, or the like. Unsubstituted methyl and phenyl are preferred.

Examples of suitable polysiloxanes are as follows.

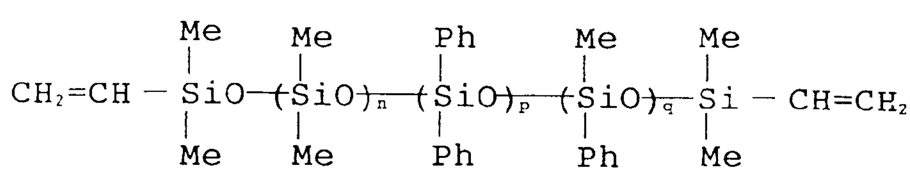

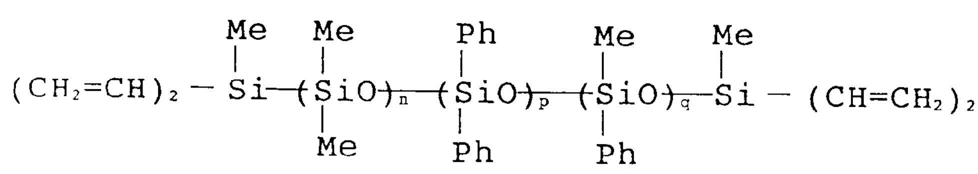

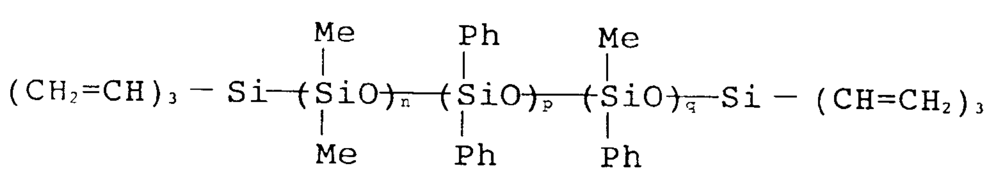

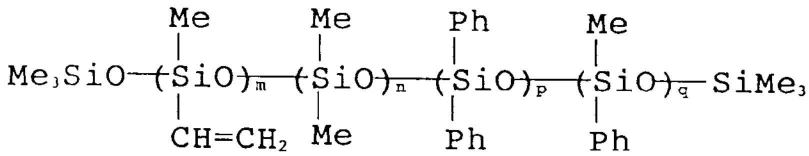

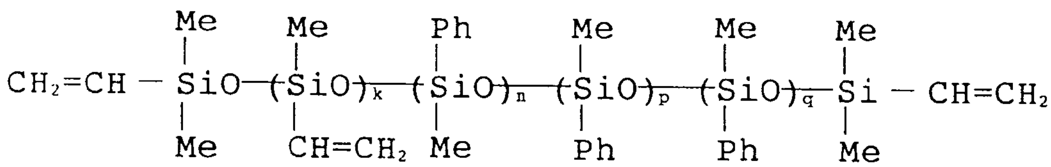

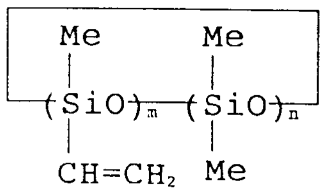

wherein Me is methyl, Ph is phenyl, n ≧ 0, p ≧ 0, q ≧ 0, m ≧ 2 and k ≧ 0.

Also included are vinyl group-containing MQ resins which are copolymers of

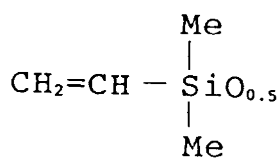

units and $SiO_2$ units, silicone resins containing $CH_2$=$CHSiO_{1.5}$ units, silicone resins containing $CH_2$=$CHSiO_{1.5}$ units and $Me_2SiO$ units, silicone resins containing

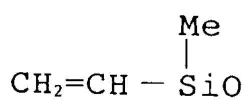

units and $MeSiO_{1.5}$ units, and silicone resins containing

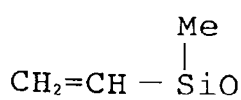

units and $C_6H_5SiO_{1.5}$ units.

Component (B) is an organic silicon compound which is not particularly limited insofar as it has at least two hydrogen atoms each directly attached to a silicon atom in a molecule. Exemplary are organohydrogensilanes and organohydrogensiloxanes. The organohydrogensiloxanes may be linear, cyclic or network and include from oligomers to polymers although tetrasiloxane and higher ones having a viscosity of up to 10,000 centipoise at room temperature are especially preferred when the flexibility of cured coatings and workability are taken into account. Typical structural formulae for component (B) are as follows.

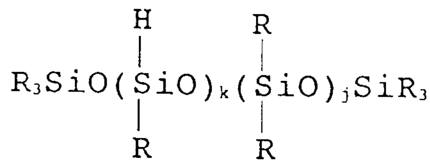

R is a monovalent hydrocarbon group, preferably an alkyl, cycloalkyl, aralkyl or aryl group having 1 to 8 carbon atoms. R may be unsubstituted, or substituted provided that the substituent does not spoil the curability of the compositions or other conventionally-desired property. Unsubstituted methyl or phenyl groups are preferred. k and j are integers; $k \geqq 2$ and $j \geqq 0$.

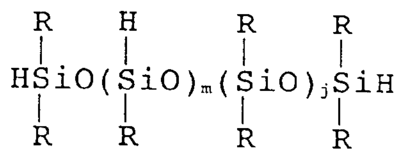

R and j are as defined above, and m is an integer of $m \geqq 0$.

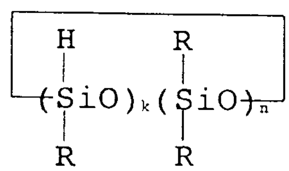

R and k are as defined above, and n is an integer of $n \geqq 1$.

$$R_pSiH_qO_{(4-p-q)/2}$$

R is as defined above, and p and q are numbers to satisfy $0 < p + q < 2$, $0 < p < 2$, and $0 < q < 2$.

Illustrative, non-limiting examples of component (B) are shown below.

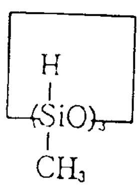

,

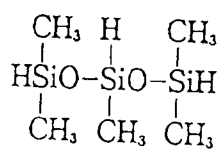

,

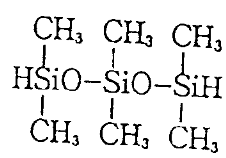

,

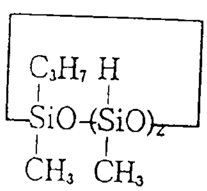

,

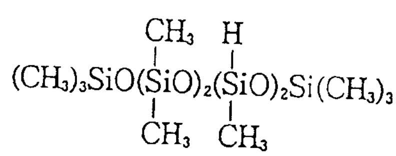

,

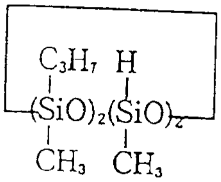 , 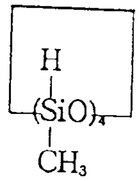 , 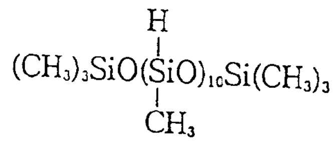 ,

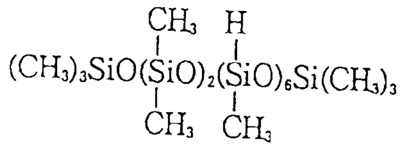 , 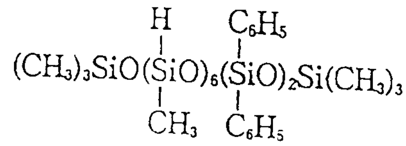 ,

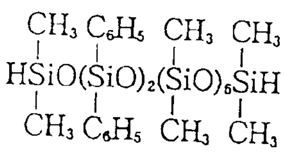 , 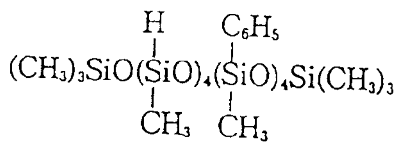 ,

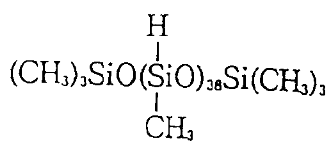 , 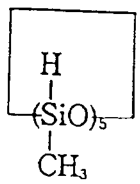 , 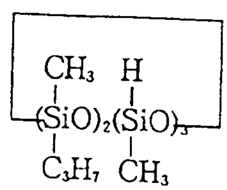 ,

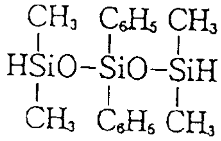 , 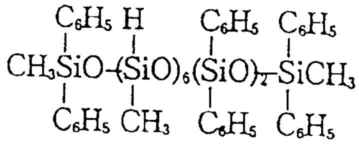

Components (A) and (B) are preferably blended such that the molar ratio of alkenyl/alkynyl group in component (A) to the hydrogen atom in component (B) may range from 1:0.5 to 1:50, especially from 1:1 to 1:10. On this basis, if the proportion of component (B) is less than 0.5, crosslinking may be short. If the proportion of component (B) is more than 50, unreacted component (B) may bleed on a coating.

Component (C) is a hydrosilylation catalyst which is generally selected from transition metals of Group VIII in the Periodic Table and their compounds. Exemplary Group VIII transition metal compounds are complexes of platinum, palladium, rhodium and ruthenium, for example, such as $PtCl_4$, $H_2PtCl_6{\cdot}6H_2O$, Pt-ether complexes, Pt - olefin complexes, $PdCl_2(PPh_3)_2$, $PdCl_2(PhCN)_2$, $RhCl_2(PPh_3)_3$ wherein Ph is phenyl. Other known hydrosilylation catalysts and mixtures of such catalysts are also useful. If desired, these catalysts may be used by diluting with solvents such as alcohol, aromatic, hydrocarbon, ketone and basic solvents.

Component (C) is blended in an amount to give 0.1 to 10,000 parts by weight of metal per million parts by weight of component (B). Catalys s may be insufficient with less than 0.1 ppm of component (C) whereas more than 10,000 ppm of component (C) may cause the cured coating to be colored due to the catalyst's own

color and is economically disadvantageous since the Group VIII metals are expensive.
Catalyst poison controlling component (D) in the form of an organic iron or aluminium compound is used with, e.g. added to a blend of, components (A), (B) and (C).

The organic iron and aluminum compounds as component (D) are not particularly limited insofar as they are soluble in components (A) and (B). Exemplary organic iron compounds include ferric organosalts e.g. ferric octylate, ferric acetate, ferric propionate and ferric naphthenate, and acetyl-acetonatoiron. Exemplary organic aluminium compounds are aluminum alkoxides and chelates as shown below.

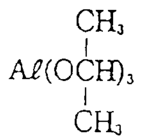 , 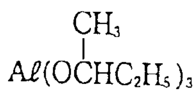 , $A\ell(acac)_3$ ,

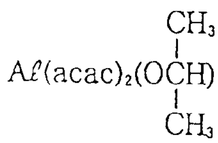 , 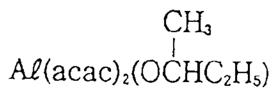 ,

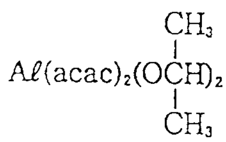 , 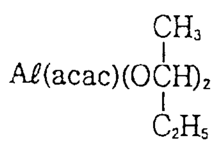 ,

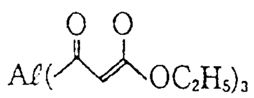 , 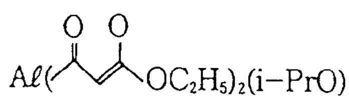 ,

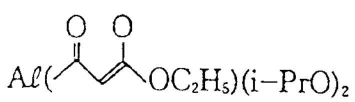 , 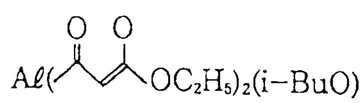 ,

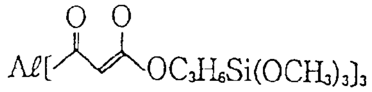 , 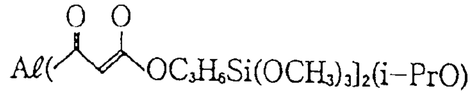 ,

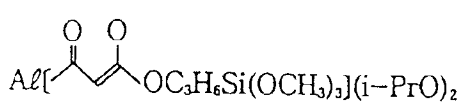 ,

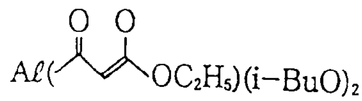

In the formulae, acac is acetylacetonato, Pr is propyl, and Bu is butyl.

Component (D) may be included in an amount corresponding to the content of catalyst poison envisaged. Since even trace amounts of catalyst poison can affect hydrosilylation reaction or catalyst component (C), component (D) is preferably used in a weight of 10 to 10,000 times the weight of the metal of component (C) in order to prohibit any such influence. Less than 10 times the metal weight of component (D) may provide insufficient guard against the catalyst poison whereas more than 10,000 times the metal weight of component (D) may cause the cured coating to be cracked or colored with iron.

In addition to the essential components (A) to (D), the composition of the present invention may further include an agent for controlling hydrosilylation reaction for the purpose of adjusting ease of operation. Such control agents include acetylene alcohols, siloxane-modified acetylene alcohols, methylvinylcyclotetrasiloxane, and hydroperoxides. Their illustrative examples are given below. Such agents are known.

$HC{\equiv}CCH_2OH$,

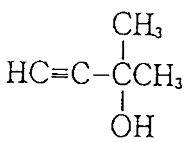 , 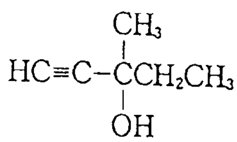 , 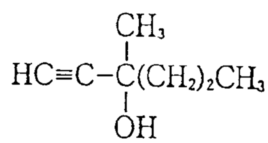 ,

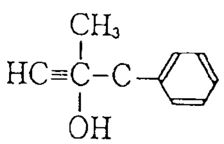 , $CH_3OCOC{\equiv}CCOOCH_3$ , 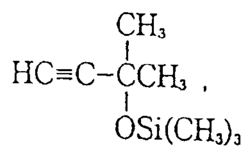 ,

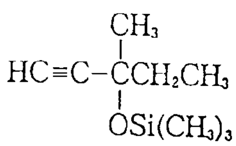 , 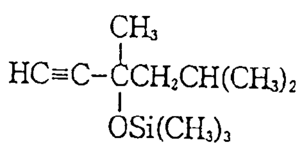

These control agents may be added in any desired amount in accordance with desired operating conditions, typically in an amount of 1 to 1,000% of the metal weight of component (C).

Also if desired, reinforcing fillers may be used in the compositions.

Exemplary fillers are reinforcing silica, ground quartz, iron oxide, alumina and vinyl-containing silicone resins.

Various other additives may be used in accordance with the intended use of the composition. Examples include heat resistance modifiers such as oxides and hydroxides of cerium and iron; coloring agents such as organic pigments or dyes and inorganic pigments (e.g., $TiO_2$, $Fe_2O_3$, and C); tackifiers such as carbon functional silanes and siloxanes; mold release agents such as silicone fluid, raw rubber and metal fatty acid salts; flame retardants such as zinc carbonate and calcium carbonate; flow control agents; and anti-settling agents.

Depending on operating conditions, the composition of the invention may be used without solvent. Where component (A) or (B) is highly viscous or component (A) is solid, it may be dissolved in an organic solvent. The organic solvent used herein is not particularly limited insofar as components (A) to (D) are soluble therein. Exemplary solvents are aromatic hydrocarbons such as benzene, toluene and xylene; aliphatic hydrocarbons such as hexane, heptane and octane; ketones such as acetone, methyl ethyl ketone, cyclohexanone, and methyl isobutyl ketone; esters such as ethyl acetate, butyl acetate and isobutyl acetate; and haloalkanes such as 1,1,1-trichloroethane, trichloroethylene and methylene chloride. Toluene and xylene are preferred for industrial purposes.

The procedure of preparing the composition of the invention is not limitative. For example, components (A), (C) and (D) are first dissolved in an organic solvent and the solution is then mixed with component (B).

Hydrosilylation reaction will take place in the composition of the invention under conventional conditions, typically by heating at a temperature of 50 to 150°C.

## EXAMPLE

Examples of the present invention are given below by way of illustration and not by way of limitation. All parts are by weight.

### Example 1

The following four components were mixed. Note that Me is methyl.

(1) vinyl-containing silicone compound, 60 parts

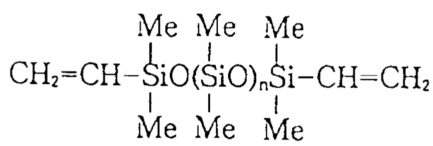

viscosity = 10,000 centistokes

(2) hydrogen atom-containing organic silicon compound, 10 parts

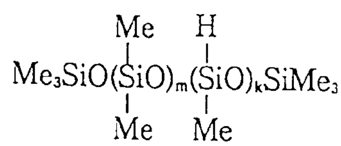

(M ≒ 12, k ≒ 12)

(3) reaction control agent, 0.3 parts

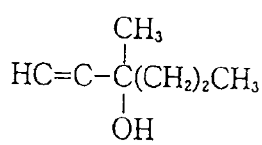

(4) xylene, 30 parts

The mixture was further blended with 2 parts of a xylene solution of chloroplatinic acid (Pt content 0.05% by weight), 2 parts of a 50% toluene solution of an aluminum chelate of the formula:

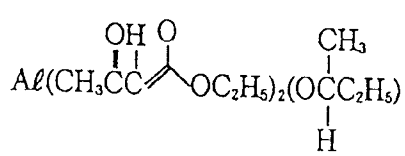

(Kelope ACS commercially available from Hope Pharmaceutical K.K.), and 100 parts of xylene to form a solution A. Solution A, 100 parts, was thoroughly mixed with 0.025 parts of N-(β-aminoethyl) -γ- aminopropyltrimethoxysilane as a nitrogenous compound. The resulting composition was cast over an iron plate, air dried for 10 minutes, and baked at 150°C for 5 minutes to form a cured coating. This cured coating had physical properties as shown in Table 1.

### Example 2

Solution A obtained in Example 1 was coated onto a cured acryl-melamine coated iron plate by means of

a bar coater, air dried for 10 minutes, and baked at 150°C for 5 minutes to form a cured coating. This cured coating had physical properties as shown in Table 1.

Example 3

A solution B was prepared by the same procedure as solution A in Example 1 except that 2 parts of a 50% toluene solution of ferric octylate (Octope Fe commercially available from Hope Pharmaceutical K.K.) was added instead of 2 parts of the aluminum chelate toluene solution. Then following the procedure of Example 1, a cured coating was formed from solution B. This cured coating had physical properties as shown in Table 1.

Comparative Example 1

A solution C was prepared by mixing 100 parts of the addition type silicone varnish used in Example 1, 2 parts of the platinum catalyst solution used in Example 1, and 100 parts of xylene. Solution C, 100 parts, was thoroughly mixed with 0.025 parts of N-(β-aminoethyl)-γ-aminopropyltrimethoxysilane. The resulting composition was cast over an iron plate, air dried for 10 minutes, and baked at 150°C for 5 minutes to form a cured coating. This cured coating had physical properties as shown in Table 1.

Comparative Example 2

Solution C obtained in Comparative Example 1 was coated onto a cured acryl-melamine coated iron plate by means of a bar coater, air dried for 10 minutes, and baked at 150°C for 5 minutes to form a cured coating. This cured coating had physical properties as shown in Table 1.

Comparative Example 3

As in Comparative Example 1, the coating was baked at 180°C for 15 minutes. This cured coating had physical properties as shown in Table 1.

Comparative Example 4

A cured coating was formed by the same procedure as in Comparative Example 1 except that 10 parts of the platinum catalyst solution was added to solution C. This cured coating had physical properties as shown in Table 1.

Table 1

| | Dryness | Solvent resistance |
|---|---|---|
| Example 1 | tack-free | OK |
| Example 2 | tack-free | OK |
| Example 3 | tack-free | OK |
| Comparative Example 1 | tacky | dissolved |
| Comparative Example 2 | tacky | dissolved |
| Comparative Example 3 | tack-free | whitened |
| Comparative Example 4 | tack-free | OK |

Dryness was examined by touching the coating with fingers.

Solvent resistance was examined by rubbing the coating with xylene-impregnated cotton wadding 10 strokes under a load of about 500 grams and then visually observing the outer appearance.

Component (D) permits components (A) and (B) to undergo hydrosilylation reaction with the aid of a hydrosilylation catalyst even in the presence of a catalyst poison.

Although some preferred embodiments have been described, many modifications and variations may be made thereto in the light of the above teachings. It is therefore to be understood that within the scope of the appended claims, the invention may be practiced otherwise than as specifically described.

## Claims

1. A hydrosilylative composition comprising
   (A) a silicone compound having at least two alkenyl or alkynyl groups in a molecule,
   (B) an organic silicon compound having at least two hydrogen atoms each directly attached to a silicon atom in a molecule,
   (C) a hydrosilylation catalyst, and
   (D) at least one of an organic iron compound and an organic aluminum compound.

2. A hydrosilylation reaction process comprising the steps of:
   subjecting (A) a silicone compound having at least two alkenyl or alkynyl groups in a molecule and (B) an organic silicon compound having at least two hydrogen atoms each directly attached to a silicon atom in a molecule to hydrosilylation reaction in the presence of (C) a hydrosilylation catalyst, and
   adding (D) at least one of an organic iron compound and an organic aluminum compound to the reaction system.

3. The process of claim 2 wherein the hydrosilylation reaction is effected in a system containing an element selected from the group consisting of N, P, S, Sn and As or in a system in contact with a material containing said element.